# DEMANDE DE BREVET EUROPEEN

(11) **EP 4 604 232 A1**
(43) Date de publication de la demande: **20.08.2025**
(21) Numéro de dépôt: 24305244.6
(22) Date de dépôt: 13.02.2024
(51) Int. Cl.: H01M 10/04, H01M 50/103, H01M 50/119, H01M 50/143, H01M 50/15, H01M 50/159, H01M 50/169, H01M 50/176, H01M 50/209, H01M 50/249, H01M 50/342, H01M 50/533, H01M 50/548, H01M 50/557

(54) **BOITIER DE CELLULE, CELLULE DE BATTERIE COMPRENANT UN TEL BOITIER ET ASSEMBLAGE DE TELLES CELLULES**

(71) Demandeur: Automotive Cells Company SE, 33520 Bruges (FR)
(72) Inventeur: BAYLAC, Johann, 33800 Bordeaux (FR); CHAUVEAU, Pierre, 33520 Bruges (FR); MATHIEU, Alexandre, 33300 Bordeaux (FR)
(74) Mandataire: Alatis

(57) **Abrégé**

L'invention concerne un boitier (100) de cellule (10) pour une cellule de batterie et une celle de batterie associée, le boitier (100) comprenant une première (101) et une deuxième (102) parois d'extrémité et quatre parois latérales (103A, 103B, 104A, 104B) s'étendant parallèlement entre elles deux à deux et parallèlement à un axe de référence (X) depuis la première paroi d'extrémité (101) jusqu'à la deuxième paroi d'extrémité (102), le boitier (100) étant caractérisé en ce qu'il comprend : un premier orifice principal (111) s'étendant dans un premier plan de référence (P1) coplanaire à une première paroi latérale (103A) du boitier (100) parmi la pluralité de parois latérales ; et un deuxième orifice principal (112) s'étendant dans un deuxième plan de référence (P2) coplanaire à une deuxième paroi latérale (103B) du boitier (100), la deuxième paroi latérale (103B) étant parallèle à la première paroi latérale (103A) du boitier (100) ; chacun des premier (111) et deuxième (112) orifices principaux étant configuré pour accueillir respectivement un premier (11) et un deuxième (12) terminal de la cellule (10) de batterie.

## Description

### DOMAINE TECHNIQUE DE L'INVENTION

L'invention concerne, de façon générale, le domaine technique des cellules de batteries de véhicules hybrides ou électriques.

L'invention se rapporte plus spécifiquement aux cellules de batteries prismatiques et à l'assemblage associé.

### ÉTAT DE LA TECHNIQUE ANTÉRIEURE

Les véhicules automobiles à traction, à propulsion ou de quatre roues motrices, électrique ou hybride, comportent un ou plusieurs modules de batterie reliés à un réseau de puissance pour alimenter un moteur électrique (de traction, de propulsion ou de quatre roues motrices).

Les modules de batterie sont regroupés dans un carter et forment alors un bloc batterie aussi souvent désigné par l'expression anglaise « battery pack », ce carter contenant généralement une interface de montage et des bornes de raccordement.

Chaque module de batterie comprend au moins une cellule électrochimique, généralement plusieurs cellules électrochimiques, générant du courant par réaction chimique, par exemple de type lithium-ion (ou Li-ion), de type Ni-Mh, ou Ni-Cd ou plomb.

Une cellule électrochimique peut être de forme parallélépipédique rectangle, on parle alors de cellule « prismatique », de forme cylindrique ou en forme de poche, désignée par l'expression anglaise « pouch ».

Les cellules prismatiques comportent un godet rigide, souvent métallique, comprenant quatre parois latérales et deux parois d'extrémité, dont une paroi dite « d'appui ». À l'intérieur du godet sont logés une pluralité d'empilements d'électrodes positives reliées les unes aux autres à un premier terminal, et une pluralité d'empilements d'électrodes négatives reliées les unes aux autres à un deuxième terminal.

De façon plus précise, un premier collecteur de courant relie la pluralité d'empilements d'électrodes positives au premier terminal et un deuxième collecteur de courant relie la pluralité d'empilements d'électrodes négatives au deuxième terminal. Les premier et deuxième collecteurs de courant se présentent sous la forme de feuilles métalliques pliées et soudées aux terminaux. Les terminaux sont eux-mêmes fixés/soudés sur la paroi d'extrémité opposée à la paroi d'appui de la cellule.

Il est connu d'assembler, en série et/ou en parallèle, une pluralité de cellules électrochimiques afin de réaliser des modules ou des batteries électriques, à l'aide d'un dispositif d'interconnexion assurant un contact électrique entre les terminaux de deux cellules électrochimiques voisines. Le dispositif d'interconnexion peut par exemple être un ensemble de languettes métalliques soudées sur plusieurs terminaux de cellules pour les relier électriquement.

Afin d'assembler mécaniquement les cellules électrochimiques reliées électriquement, il est connu de les aligner sur un support plan ou un rail, la paroi d'appui étant en contact plan avec le support ou le rail, et de les maintenir aux deux extrémités compressées par des plaques parallèles fixes, un tel assemblage étant désigné sous le terme « module ».

Cependant, il est nécessaire de prévoir un volume supplémentaire à l'intérieur du godet des cellules, ce volume étant situé entre les empilements d'électrodes et la paroi d'extrémité opposée à la paroi d'appui du godet et servant à l'intégration des collecteurs de courant. La présence de ce volume augmente l'encombrement spatial des cellules, sans pour autant améliorer leurs performances.

De plus, le pliage des collecteurs de courant, qui sont des feuilles métalliques, exerce une contrainte permanente sur ces collecteurs qui peuvent, au cours des utilisations et d'éventuels chocs, s'abîmer voire se déchirer et compromettre le fonctionnement des cellules et des modules de batterie.

Enfin, le positionnement des terminaux sur une paroi d'extrémité de la cellule oblige l'utilisation d'éléments d'interconnexion pour relier les cellules entre elles. L'ajout de ces éléments d'interconnexion prolonge le temps de production d'un module, et, lorsque ces éléments sont soudés aux terminaux, ils ne permettent pas le démontage d'un module de batterie.

### EXPOSE DE L'INVENTION

L'invention vise à remédier à tout ou partie des inconvénients de l'état de la technique en proposant notamment une solution permettant d'obtenir un assemblage de cellules de batterie à l'encombrement réduit sans pour autant réduire les performances des cellules.

Pour ce faire est proposé, selon un premier aspect de l'invention, un boitier de cellule pour une cellule de batterie, le boitier comprenant une première et une deuxième parois d'extrémité et quatre parois latérales s'étendant parallèlement entre elles deux à deux et parallèlement à un axe de référence, depuis la première paroi d'extrémité jusqu'à la deuxième paroi d'extrémité, le boitier étant remarquable en ce qu'il comprend :
- un premier orifice principal s'étendant dans un premier plan de référence coplanaire à une première paroi latérale du boitier parmi la pluralité de parois latérales ; et
- un deuxième orifice principal s'étendant dans un deuxième plan de référence coplanaire à une deuxième paroi latérale du boitier, la deuxième paroi latérale étant parallèle à la première paroi latérale du boitier ;
chacun des premier et deuxième orifices principaux étant configuré pour accueillir respectivement un premier et un deuxième terminal de la cellule de batterie.

Grâce à une telle combinaison de caractéristiques, tous les composants du boitier de la cellule sont compris entre un premier plan parallèle à la première paroi latérale du boitier et un deuxième plan parallèle à la deuxième paroi latérale du boitier. Un assemblage de plusieurs cellules de batterie se fait par simple empilement de boitiers de cellules, ce qui permet de réduire l'encombrement spatial de la cellule et la quantité d'éléments d'interconnexion additionnels nécessaires.

Selon un mode de réalisation, le boitier comprend un godet (aussi appelé « can » en termes anglosaxons) et un ou deux couvercle(s) configuré(s) pour fermer, avec le terminal associé, un espace intérieur du godet, et :
- le premier orifice principal est solidaire du godet ou du couvercle ou de l'un des deux couvercles ;
- le deuxième orifice principal est solidaire du godet ou du couvercle ou de l'autre des deux couvercles.

En particulier, le couvercle du boitier, ou chacun des deux couvercles si le boitier comprend deux tels couvercles présente :
- une paroi d'extrémité ; et
- quatre parois latérales s'étendant parallèlement entre elles deux à deux et parallèlement à un axe de référence depuis la paroi d'extrémité jusqu'à un rebord de raccordement, le rebord de raccordement du couvercle présentant un contour fermé et délimitant une ouverture destinée à être raccordée à un rebord de raccordement formé sur une portion d'extrémité du godet de la cellule.

Selon un mode de réalisation, dans une telle configuration et pour un couvercle donné, le couvercle comprend sur l'une de ses parois latérales, l'un des deux orifices principaux parmi le premier orifice principal et le deuxième orifice principal pour accueillir un terminal de cellule.

Selon un mode de réalisation, les première et deuxième parois latérales du boitier, c'est-à-dire les parois délimitant les premier et deuxième orifices principaux, forment des grandes surfaces latérales du boitier par rapport aux deux autres parois latérales formant des petites faces latérales du boitier. En d'autres termes, ces grandes surfaces latérales présentent chacune une face plus grande à celles des deux autres parois latérales et plus grande à celles des faces des parois d'extrémités du boitier.

Selon un mode de réalisation, le boitier comprend :
- un premier orifice secondaire complémentaire du premier orifice principal, s'étendant dans le deuxième plan de référence, de préférence disposé en regard du premier orifice principal par rapport à un axe parallèle à un axe transversal ; et/ou
- un deuxième orifice secondaire complémentaire du deuxième orifice principal, s'étendant dans le premier plan de référence, de préférence disposé en regard du deuxième orifice principal par rapport à un axe parallèle à un axe transversal.

Selon un mode de réalisation, le premier orifice secondaire est solidaire du godet ou du couvercle ou de l'un des deux couvercles ; et le deuxième orifice secondaire est solidaire du godet ou du couvercle ou de l'autre des deux couvercles.

Selon un mode de réalisation, au moins une paroi du boitier est pourvue d'au moins un évent d'aération fermé par une paroi amincie configurée pour former un point de faiblesse du boitier en cas d'effet de gonflement contenu à l'intérieur de la cellule, de préférence une paroi du couvercle ou d'un des deux couvercles.

Selon un mode de réalisation, le boitier possède une longueur supérieure à 250 mm, de préférence supérieure à 300 mm et/ou inférieure à 1500 mm, de préférence inférieure à 1200 mm.

Selon un autre aspect de l'invention, celle-ci a trait à une cellule de batterie remarquable en ce qu'elle comprend un boitier de cellule tel que décrit ci-avant.

Selon un mode de réalisation, le boitier délimite un espace intérieur à l'intérieur duquel est logé au moins un empilement d'électrodes positives et négatives, les électrodes positives étant reliées les unes aux autres à un premier terminal de cellule et les électrodes négatives étant reliées les unes aux autres à un deuxième terminal de cellule, et :
- le premier terminal de cellule est maintenu fixement par une interface de fixation dans le premier orifice principal ; et
- le deuxième terminal de cellule est maintenu fixement par une interface de fixation dans un deuxième orifice principal.

Plus précisément, dans l'espace intérieur du boitier, toutes les électrodes positives sont reliées à un premier collecteur de courant, et toutes les électrodes négatives sont reliées à un deuxième collecteur de courant, les premier et deuxième collecteurs se présentant sous la forme de feuilles métalliques. Le boitier de l'invention présente pour avantage une diminution des contraintes exercées sur les collecteurs de courant, qui ne sont pas pliés mais s'étendent parallèlement à l'axe de référence du boitier et sont soudés, chacun à une extrémité axiale, au terminal de cellule respectif. L'invention remédie ainsi aux risques de rupture des collecteurs de courant et/ou de mauvaise propagation du courant dans les terminaux de cellules.

Selon un mode de réalisation, les premier et deuxième terminaux sont fixés aux interfaces de fixation, par des moyens de fixation, de préférence par des soudures, par exemple effectuées au moyen d'un laser.

Selon un mode de réalisation, les interfaces de fixation sont introduites dans la cellule à travers les premier et deuxième orifices secondaires de la cellule.

Selon un mode de réalisation :
- le premier terminal comprend une surface de contact électrique configurée pour venir au contact d'un autre terminal d'une cellule distincte adjacente, la surface de contact étant parallèle au premier plan de référence ; et/ou
- le deuxième terminal comprend une surface de contact électrique pour venir au contact d'un autre terminal d'une cellule distincte adjacente, la surface de contact étant parallèle au deuxième plan de référence, et de préférence parallèle à la surface de contact électrique du premier terminal.

Selon un mode de réalisation, les premier et deuxième terminaux sont orientés suivant deux directions opposées dans une position assemblée de la cellule.

Cette configuration présente l'avantage de ne pas avoir d'éléments d'interconnexion additionnels entre les cellules de batterie.

Selon un autre aspect, l'invention concerne également un assemblage d'une pluralité de cellules de batterie telles que décrites ci-avant, l'assemblage étant remarquable en ce que les cellules sont accolées successivement deux à deux suivant un axe d'assemblage, de sorte que pour chaque paire de cellules adjacentes de la pluralité de cellules, un premier terminal de l'une des cellules de la paire de cellules adjacentes est en contact avec un deuxième terminal de l'autre des cellules de la paire de cellules adjacentes.

Un tel assemblage est remarquable en ce que la connexion entre les cellules est assurée par une simple compression des cellules suivant l'axe d'assemblage. L'assemblage obtenu est compact, simple à réaliser et démontable.

Selon un mode de réalisation, l'assemblage comprend des moyens de compression pour presser l'assemblage de cellules de part et d'autre dudit assemblage de cellules suivant l'axe d'assemblage.

Les moyens de compression utilisés permettent de réduire les effets de gonflement des cellules à long terme. De plus, les moyens de compression créent une force de direction parallèle à l'axe d'assemblage, la force permettant de rapprocher les unes des autres les surfaces de contact des terminaux et de maintenir la connexion électrique entre les cellules.

### BRÈVE DESCRIPTION DES FIGURES

D'autres caractéristiques et avantages de l'invention ressortiront à la lecture de la description qui suit, en référence aux figures annexées, qui illustrent :
- figure 1 : un schéma de côté d'une cellule de batterie selon un premier mode de réalisation de l'invention ;
- figure 2 : une vue de coupe d'une portion de cellule de batterie selon le mode de réalisation de la figure 1 ;
- figure 3 : un schéma en perspective isométrique d'une cellule de batterie selon un deuxième mode de réalisation de l'invention ;
- figure 4 : un schéma de côté représentant l'assemblage d'une pluralité de cellules obtenues selon un mode de réalisation de l'invention ;
- figure 5 : un schéma en perspective isométrique représentant l'assemblage d'une pluralité de cellules obtenues selon un mode de réalisation de l'invention ;
- figure 6 : un schéma représentant l'encombrement spatial d'un assemblage d'une pluralité de cellules grâce à l'invention ;
- figures 7A, 7B et 7C ; des schémas de principe d'un assemblage d'une pluralité de cellules et des moyens de compression associés, selon un mode de réalisation de l'invention.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre **X, Y, Z** indiqué aux figures.

### DESCRIPTION DÉTAILLÉE D'UN MODE DE RÉALISATION

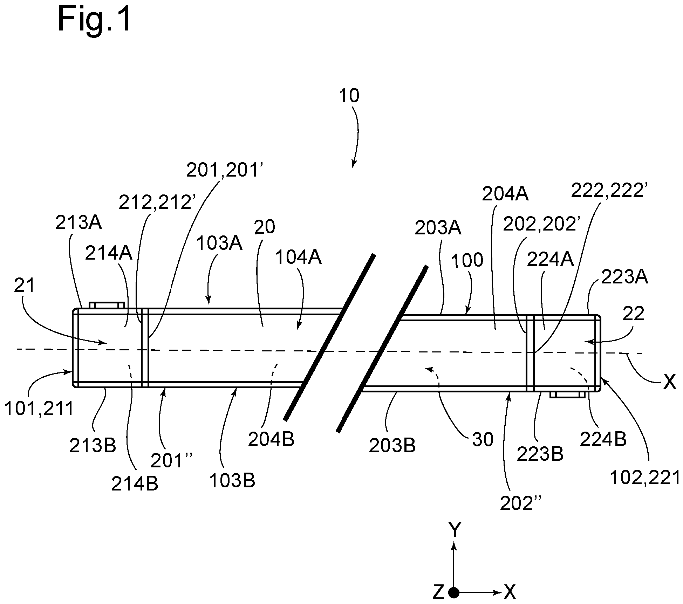

La figure 1 illustre une cellule **10** prismatique de batterie selon un premier mode de réalisation de l'invention. La cellule **10** de batterie présente une forme prismatique de forme parallélépipédique rectangle. La cellule de batterie **10** comprend un boitier **100** rigide, contrairement par exemple aux cellules en forme de poche. Le boitier **100** délimite un espace intérieur **30** à l'intérieur duquel est logé un ou plusieurs empilements électrochimiques (i.e. les « stacks ») pour former la cellule.

Dans ces exemples, le boitier **100** de la cellule **10** est prévu pour loger le ou les empilements électrochimiques avec un électrolyte solide (non illustré).

Le boitier **100** de la cellule **10** présente une forme prismatique de forme parallélépipédique rectangle. Le boitier **100** comprend une première **101** et une deuxième **102** parois d'extrémité, et quatre parois latérales **103A, 103B, 104A, 104B,** les quatre parois latérales s'étendant parallèlement entre elles deux à deux et parallèlement à un axe longitudinal de référence **X** du boitier **100** de la cellule **10.**

En particulier, les quatre parois latérales **103A, 103B, 104A, 104B** comprennent deux parois latérales parallèles en vis-à-vis dites « petites » parois **104A, 104B** et de deux parois latérales parallèles en vis-à-vis dites « grandes » parois **103A, 103B,** les grandes parois **103A, 103B** présentant chacune une aire supérieure à l'aire des petites parois **104A, 104B.** Les « petites » parois **104A, 104B** forment des parois supérieure et inférieure, respectivement et s'étendent horizontalement. Les « grandes » parois **103A, 103B** forment des parois latérales avant et arrière et s'étendent verticalement.

Une longueur **L** de la cellule **10** désigne sa plus grande dimension, correspondant à la distance entre les deux parois d'extrémité **101, 102.** Plus précisément, la cellule **10** possède une longueur supérieure à 250 mm, de préférence supérieure à 300 mm et/ou inférieure à 1500 mm, de préférence inférieure à 1200 mm.

Une hauteur de la cellule **10** désigne la distance entre les « petites » parois **104A, 104B** du boitier **100** de la cellule **10.**

Les parois latérales **103A, 103B, 104A, 104B** s'étendent parallèlement à l'axe longitudinal de référence du boitier **100** depuis la première paroi d'extrémité **101** jusqu'à la deuxième paroi d'extrémité **102** opposée longitudinalement.

Les parois latérales **103A, 103B, 104A, 104B** sont adjacentes deux à deux et forment un sous-ensemble tubulaire de section rectangulaire formant un corps du boitier **100** fermé à ses deux extrémités longitudinales par les première et deuxième parois d'extrémités **101, 102.**

Dans le mode de réalisation de la figure 1, le boitier **100** comprend, et en particulier est constitué par un godet **20** fermé par deux couvercles : un premier couvercle **21** et un deuxième couvercle **22.**

Le premier couvercle **21** présente une forme parallélépipédique rectangle et comprend une paroi d'extrémité **211,** et quatre parois latérales **213A, 213B, 214A, 214B** s'étendant parallèlement entre elles deux à deux et parallèlement à un axe de référence **X1** du premier couvercle **21.**

Lesdites parois latérales **213A, 213B, 214A, 214B** s'étendent depuis la paroi d'extrémité **211** jusqu'à une extrémité longitudinalement opposée à la paroi d'extrémité **211,** où les quatre parois latérales **213A, 213B, 214A, 214B** du premier couvercle **21** forment un rebord de raccordement **212** délimitant un contour fermé du premier couvercle **21.**

Les parois latérales **213A, 213B, 214A, 214B** sont adjacentes deux à deux et forment un sous-ensemble tubulaire de section rectangulaire fermé à une de ses extrémités longitudinales par la paroi d'extrémité **211** et ouverte à son extrémité longitudinale opposée par une ouverture **212'** délimitée par le rebord de raccordement **212.**

Le deuxième couvercle **22** présente une forme parallélépipédique rectangle et comprend une paroi d'extrémité **221,** et quatre parois latérales **223A, 223B, 224A, 224B** s'étendant parallèlement entre elles deux à deux et parallèlement à un axe de référence **X2** du deuxième couvercle **22.**

Lesdites parois latérales **223A, 223B, 224A, 224B** s'étendent depuis la paroi d'extrémité **221** jusqu'à une extrémité longitudinalement opposée à la paroi d'extrémité **221** où les quatre parois latérales **223A, 223B, 224A, 224B** du deuxième couvercle **22** forment un rebord de raccordement **222** délimitant un contour fermé du deuxième couvercle **22.**

Les parois latérales **223A, 223B, 224A, 224B** sont adjacentes deux à deux et forment un sous-ensemble tubulaire de section rectangulaire fermé à une de ses extrémités longitudinales par la paroi d'extrémité **221** et ouverte à son extrémité longitudinalement opposée par une ouverture **222'** délimitée par le rebord de raccordement **222.**

Le premier couvercle **21** et le deuxième couvercle **22** présentent ainsi un volume intérieur délimité par leurs parois respectives. Les premier et deuxième couvercles **21, 22** peuvent être obtenus par divers procédés de fabrication, par exemple par extrusion et sont fabriqués au moins en partie en matériau(x) métallique(s).

Le godet **20** du boitier **100** présente une forme prismatique de forme parallélépipédique rectangle. Le godet **20** comprend quatre parois latérales **203A, 203B, 204A, 204B,** les quatre parois latérales s'étendant parallèlement entre elles deux à deux et parallèlement à l'axe longitudinal de référence **X** du boîtier **100** en position assemblée de la cellule **10.** De manière générale, le godet **20** pourra être formé à partir de tout matériau répondant aux caractéristiques fonctionnelles souhaitées. De préférence, le godet **20** est en partie en matériau(x) métallique(s), de préférence encore constitué de matériau(x) métallique(s), par exemple en aluminium.

Les parois latérales **203A, 203B, 204A, 204B** s'étendent parallèlement à l'axe longitudinal de référence **X** du boitier **100** depuis une première portion d'extrémité **201"** jusqu'à une deuxième portion d'extrémité **202"** axialement opposée.

Les parois latérales **203A, 203B, 204A, 204B** sont adjacentes deux à deux et forment un sous-ensemble tubulaire de section rectangulaire ouvert à longitudinalement de part et d'autre, chaque portion d'extrémité présentant une ouverture, respectivement une première ouverture **201',** délimitée par un premier rebord de raccordement **201** associé, et une deuxième ouverture **202',** délimitée par un deuxième rebord de raccordement **202** associé. De cette manière, les parois latérales **203A, 203B, 204A, 204B** du godet **20** délimitent un espace intérieur ouvert de part et d'autre, axialement par rapport à l'axe de référence **X.**

La première ouverture **201'** et la deuxième ouverture **202'** du godet **20** s'étendent dans des plans parallèles l'un avec l'autre et orthogonaux aux parois latérales **203A, 203B, 204A, 204B.**

La première ouverture **201'** et la deuxième ouverture **202'** du godet **20** sont fermées de part et d'autre du godet **20** respectivement par le premier couvercle **21** et le deuxième couvercle **22.**

Le boitier **100** est configuré de sorte que le premier rebord de raccordement **201** du godet **20** coopère avec le rebord de raccordement **212** complémentaire correspondant du premier couvercle **21** du boitier **100,** et le deuxième rebord de raccordement **202** du godet **20** coopère avec le rebord de raccordement **222** complémentaire correspondant du deuxième couvercle **22** du boitier **100,** ceci pour fermer le boitier **100.** Chaque couvercle **21** est fixé au godet **20** par des moyens de fixation à demeure, par exemple par soudage. Ainsi, dans une configuration possible les premier et deuxième rebords de raccordement **201, 202** du godet **20** sont aboutés et soudés aux rebords de raccordement **212, 222** du premier **21** et du deuxième **22** couvercles pour fermer le boitier **100** de la cellule **10.**

Dans une position fermée du boitier **100** dans laquelle les couvercles ferment les ouvertures de part et d'autre axialement du godet **20** par rapport à l'axe de référence **X** :
- chaque paroi latérale **213A, 213B, 214A, 214B** du premier couvercle **21** est positionnée dans le prolongement axial par rapport à l'axe de référence **X** de l'une des parois latérales **203A, 203B, 204A, 204B** du godet **20** d'un côté du godet **20,** depuis la première portion d'extrémité **101 ;** et
- chaque paroi latérale **223A, 223B, 224A, 224B** du deuxième couvercle **22** est positionnée dans le prolongement axial par rapport à l'axe de référence **X** de l'une des parois latérales **203A, 203B, 204A, 204B** du godet **20** de l'autre côté du godet **20,** depuis la deuxième portion d'extrémité **102.**

Ainsi dans ce mode de réalisation, le godet **20** correspond à une partie centrale du corps du boitier **100,** les couvercles **21, 22** rapportés venant fermer le corps de boitier **100** pour former ledit boitier **100** dans une position assemblée.

La première paroi d'extrémité **101** et la deuxième paroi d'extrémité **102** du boitier **100** sont constituées respectivement la paroi d'extrémité **211** du premier couvercle **21** et la paroi d'extrémité **221** du deuxième couvercle **22.**

Les quatre parois latérales **103A, 103B, 104A, 104B** du boitier **10** sont formée par la réunion des parois latérales **213A, 213B, 214A, 214B** du premier couvercle **21,** des parois latérales **203A, 203B, 204A, 204B** du godet **20,** et des parois latérales **221A, 221B, 222A, 222B** du deuxième couvercle **22.**

Les grandes parois latérales **203A, 203B** du godet **20** sont ainsi coplanaires, à une première extrémité, à deux parois latérales opposées **213A, 213B** du premier couvercle **21,** et, à une deuxième extrémité, à deux parois latérales opposées **223A, 223B** du deuxième couvercle **22.**

Les petites parois latérales **204A, 204B** du godet **20** sont ainsi coplanaires, à une première extrémité, à deux parois latérales opposées **214A, 214B** du premier couvercle **21,** et, à une autre extrémité, à deux parois latérales **224A, 224B** opposées du deuxième couvercle **22.**

Conformément à l'invention, le boitier **100** comprend :
- un premier orifice principal **111** s'étendant dans un premier plan de référence **P1** coplanaire à une première paroi latérale du boitier **100** parmi la pluralité de parois latérales **103A, 103B, 104A, 104B,** en particulier l'une grande paroi latérale ou paroi latérale transverse **103A** du boitier **100 ;** et
- un deuxième orifice principal **112** s'étendant dans un deuxième plan de référence **P2** coplanaire à une deuxième paroi latérale du boitier **103B,** parmi la pluralité de parois latérales **103A, 103B, 104A, 104B,** en particulier l'autre grande paroi latérale ou paroi latérale transverse **103B** du boitier **100,** la deuxième paroi latérale **103B** étant parallèle à la première paroi latérale **103A** du boitier. Autrement dit les plans de références **P1 et P2** sont parallèles.

En particulier, la distance entre les plans de références **P1** et **P2** définit une épaisseur **e** du boitier **100** de la cellule **10** de batterie. Chacun de ces premier et deuxième orifices principaux **111,112** est configuré pour accueillir respectivement un premier terminal **11** et un deuxième terminal **12** de la cellule **10** de batterie.

Les première et deuxième parois latérales du boitier **103A, 103B** traversées par les premier et deuxième orifices principaux **111, 112** correspondent aux grandes parois latérales **103A, 103B** verticales avant et arrière du boitier **100.**

De manière générale, le premier orifice principal **111** est disposé au voisinage de la première paroi d'extrémité **101** du boitier **100,** et le deuxième orifice principal **112** est disposé au voisinage de la deuxième paroi d'extrémité **102.**

En particulier dans ce mode de réalisation :
- le premier orifice principal **111** est porté par, ou solidaire, de l'un des deux couvercles, à savoir ici le premier couvercle **21** ; et
- le deuxième orifice principal **112** est porté par, ou solidaire de, l'un des deux couvercles, à savoir ici le deuxième couvercle **22.**

Plus précisément, la paroi latérale **213A** du premier couvercle **21** est traversée par le premier orifice principal **111** dans lequel est inséré un premier terminal de cellule **11** en position assemblée. La paroi latérale **223A** du deuxième couvercle **22** est traversée par le deuxième orifice principal **112** dans lequel est inséré le deuxième terminal de cellule **12.** Les premier et deuxième orifices principaux **111, 112** sont par exemple formés par perçage ou découpage des parois latérales **213A, 223B** correspondantes des couvercles **21, 22** associés de la cellule **10.**

Les premier et deuxième terminaux **11, 12** de la cellule **10** possèdent respectivement une première surface de contact électrique **S1** et une deuxième surface de contact électrique **S2** parallèles aux parois latérales **213A, 223B** des premier et deuxième couvercles **11, 12** traversées respectivement par le premier orifice principal **111** et le deuxième orifice principal **112,** et plus généralement parallèles aux parois latérales **103A, 103B** avant et arrière correspondantes.

Les surfaces de contact **S1, S2** planes des premiers et deuxième terminaux **11, 12** sont constituées d'un matériau électriquement conducteur.

Ainsi, les premier et deuxième terminaux **11, 12** sont positionnés latéralement de part et d'autre de l'axe de référence **X** du boitier **100,** dans des orifices **111, 112** coplanaires aux grandes surfaces **103A, 103B** du godet **20** du boitier **100.** Une droite normale aux surfaces de contact **S1, S2** des premiers et deuxième terminaux **11, 12** est donc orthogonale à l'axe longitudinal de référence **X.**

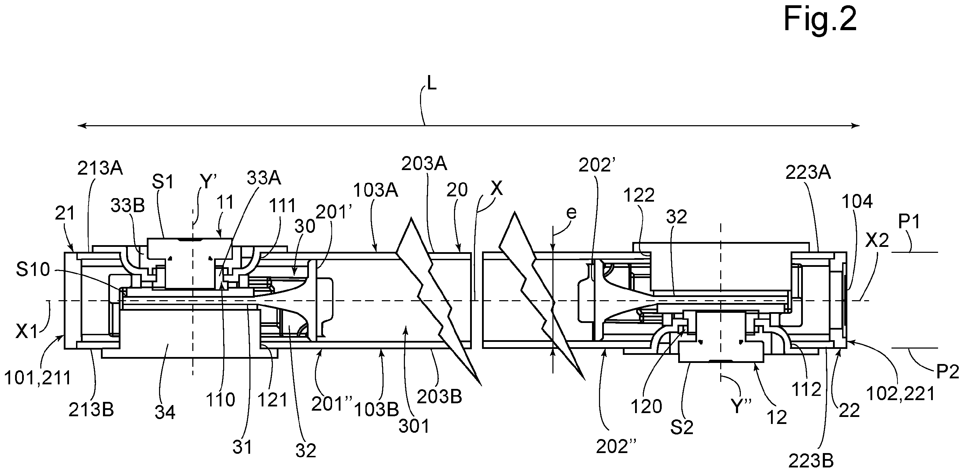

La figure **2** représente un détail d'une première interface de fixation **110** maintenant fixement en position le premier terminal de cellule **11 à** travers le premier orifice principal **111.**

La première interface de fixation **110** permet de maintenir le premier terminal de cellule **11** en position traversante du premier orifice principal **111,** la première interface de fixation **110** comprenant au moins une paire de pièces annulaires **33A, 33B** entourant le premier terminal **11** et comprenant une pièce annulaire intérieure **33A** de fixation et une pièce annulaire extérieure **33B** de fixation coopérant ensemble à travers l'orifice principal **111** et assurant une fonction de maintien du premier terminal **11** et d'étanchéité entre l'intérieur du boitier **100** et l'extérieur. Le maintien assuré par la paire de pièces annulaires **33A, 33B** est d'une part longitudinal pour permettre de maintenir centré le premier terminal **11** à travers ledit orifice principal **111,** et d'autre part, transversal en maintenant le premier terminal à un même niveau. Ces moyens de maintient permettent de maintenir déportée la surface de contact **51** correspondante à une distance prédéterminée de la paroi associée du premier couvercle **21** (paroi **213A**), et plus généralement du boitier **100** (paroi **103A**), qui est constante.

Le boitier **100** fermé délimite un espace intérieur **30** dans lequel est logé au moins un empilement **301** formé de paires d'électrodes positives et d'électrodes négatives et d'un séparateur séparant chaque paire d'électrodes, le nombre d'empilements variant selon la taille du boitier **100** de la cellule **10.** L'électrolyte utilisé peut être un électrolyte solide ou liquide, de préférence l'électrolyte utilisé est un électrolyte solide. Les électrodes d'une même polarité sont reliées à un premier collecteur de courant **31,** qui présente le plus souvent une forme de feuillard métallique permettant de relier électriquement les électrodes d'un premier pôle électrique de l'empilement **301,** par exemple de polarité positive, au premier terminal **11** de cellule.

Plus précisément, le premier collecteur de courant **31** s'étend longitudinalement dans l'espace intérieur **30** du boitier **100.** Une extrémité distale du premier collecteur de courant **31** vient se loger dans l'espace intérieur du premier couvercle **21.** Le premier collecteur de courant **31** prend la forme d'une lamelle en matériau électriquement conducteur pincée transversalement d'une part entre une butée **34** et d'autre part, le premier terminal **11** de cellule.

Dans une telle configuration, le premier collecteur de courant **31** vient au contact d'une surface intérieure **S10** électriquement conductrice, de préférence plane, du premier terminal de cellule **11,** sur laquelle il est fixé par soudure, de préférence par une soudure laser.

Par ailleurs, le premier couvercle **21** du boitier **100** comporte un premier orifice secondaire **121** disposé transversalement en regard du premier orifice principal **111** du premier couvercle **11** du boitier **10.** Ainsi, d'un côté du boitier **100,** la paroi latérale **213A** du premier couvercle **21** est traversée par le premier orifice principal **111** dans lequel est inséré le premier terminal de cellule **11** en position assemblée et de l'autre côté du boitier **100,** sur la paroi opposée, la paroi latérale **213B** du premier couvercle **21** est traversée par le premier orifice secondaire **121.** Ces deux orifices **111, 121** sont centrés suivant un axe de terminal **Y'** parallèle à l'axe transversal **Y.**

Le premier orifice secondaire **121** permet, lors de l'assemblage de la cellule **10** de batterie, d'offrir une fenêtre d'accès à l'intérieur du boitier **100** pour procéder à des opérations de fabrication, notamment pour souder le premier collecteur de courant **31** sur la surface de contact électrique intérieure **S10** du premier terminal **11,** pour manipuler le sous-ensemble comprenant le premier terminal **11,** le premier orifice principal **111,** la première interface de fixation **110,** la pièce annulaire intérieure **33A** de fixation, la pièce annulaire extérieure **33B** de fixation, et un pied de borne **11'** du terminal **11** à travers le premier orifice secondaire **121.**

La butée **34** forme un bouchon de l'orifice secondaire **121** et est configurée pour fermer de façon étanche aux gaz le premier orifice secondaire **121,** en position assemblée, et présente une extrémité distale logée à l'intérieur du boitier **100** en position assemblée configurée pour venir contre le premier collecteur de courant **31** alors pincé transversalement entre le premier terminal **11** et ladite butée **34.** Une extrémité proximale de ladite butée **34** forme une tête de la butée **34** et vient couvrir le premier orifice secondaire **121** à l'extérieur du boitier **100** et fermer ledit orifice **121.** Cette extrémité proximale est fixée à la paroi **103B** du boitier **100** associée par des moyens de fixation telle qu'une soudure. Pour améliorer l'étanchéité du boitier **100,** le corps de la butée **34** au droit du premier orifice secondaire **121** présente une section ajustée au profil dudit orifice secondaire **121.**

La cellule **10** comprend en outre une garniture isolante **32** pour isoler électriquement à l'intérieur du boitier **100** l'ensemble de connectique depuis le premier collecteur **31** jusqu'au premier terminal **11.** La garniture isolante **32** présente ici la forme d'un film en matériau électriquement isolant pour empêcher tout faux contact ou mauvaise circulation du courant dans le premier terminal **11.**

De façon quasi-symétrique par rapport à l'axe longitudinal de référence **X,** la cellule **10** comporte, à une autre extrémité axiale, une deuxième interface de fixation **120** maintenant fixement en position le deuxième terminal de cellule **12** à travers le deuxième orifice principal **112.** Un deuxième collecteur de courant **32** permet de relier électriquement les électrodes d'un deuxième pôle électrique de l'empilement **301,** par exemple de polarité négative, au deuxième terminal **12** de cellule **10.**

La configuration de l'ensemble de connectique depuis le deuxième collecteur **32** jusqu'au deuxième terminal **12** est similaire à celui associé au premier terminal **11.** En substance, ces configurations diffèrent essentiellement en ce que le deuxième terminal **12** est orienté transversalement dans une direction opposée à celle du premier terminal **11.** En effet, l'orientation est inversée puisque le deuxième orifice principal **112** traverse la paroi opposée **103B** du boitier **100,** et plus précisément la grande paroi latérale **223B** correspondante du deuxième couvercle **22.**

Le deuxième orifice secondaire **122** complémentaire du deuxième orifice principal **112** traverse la paroi opposée **223A** du deuxième couvercle **22,** coplanaire avec la paroi **103A** du boitier **100** avec la paroi traversée par le premier orifice principal **111.**

De manière générale :
- le premier orifice secondaire **121** complémentaire du premier orifice principal **111** s'étend dans le deuxième plan de référence **P2** et est disposé en regard du premier orifice principal **111** par rapport à l'axe transversal **Y'** correspondant ; et/ou
- le deuxième orifice secondaire **122** complémentaire du deuxième orifice principal **112** s'étend dans le premier plan de référence **P1,** de préférence disposé en regard du deuxième orifice principal **112** par rapport à l'axe transversal **Y"** correspondant.

Les parois d'extrémité **101, 102** du boitier **100,** plus précisément les parois d'extrémité **211, 221** des deux couvercles **21, 22** comportent chacune un évent d'aération **104** prévu pour évacuer la chaleur produite dans l'espace intérieur **30** du boitier **100.**

Bien entendu, les interfaces de fixation **110, 120** des terminaux **11, 12** la cellule **10** de batterie au boitier **10** ne sont pas exhaustifs et peuvent comporter des composants supplémentaires ou différents permettant d'assurer les mêmes fonctions que décrites précédemment, en particulier le maintien en position et l'isolation électrique des premier et deuxième terminaux **11, 12** de cellule. Les fonctions de maintien et d'étanchéité par les interfaces de fixation **110, 120,** en particulier ici par la paire de pièces annulaires **33A, 33B,** pourrait également être assurer par des éléments distincts. Toutefois, la configuration telle que décrite en référence aux figures permet de limiter le nombre de pièces et de simplifier la fabrication de la cellule, impactant également le coût de revient à la baisse. Il en est de même s'agissant des fonctions de bouchon et de pincement en partie de la butée **34** qui pourraient également être assurées par des éléments distincts.

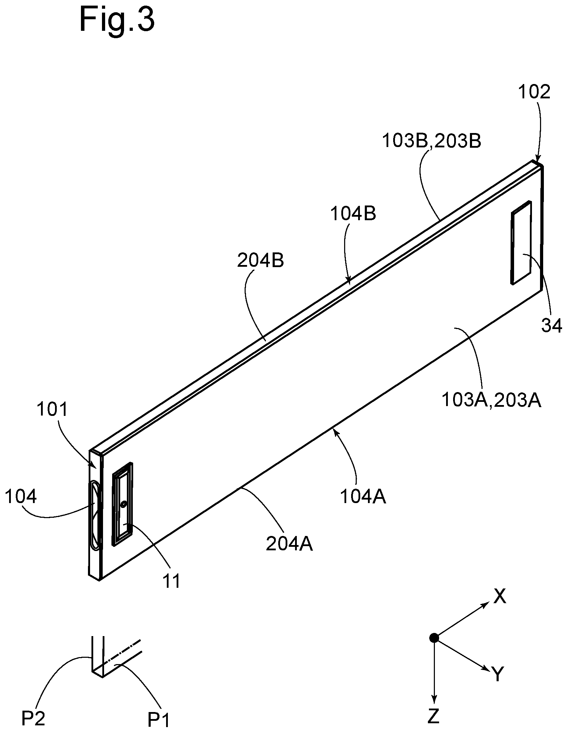

La cellule de batterie **10** représentée sur la figure **3** diffère de celle représentée sur les figures **1** et **2** en ce que les orifices principaux **111, 112** et secondaires **121, 122** accueillant les premier et deuxième terminaux **11, 12** sont formés directement sur deux extrémités longitudinales **203A, 203B** du godet **20** du boitier **100.** Dans cette configuration, le godet **20** est constitué par le corps du boitier **100.**

Les parois latérales **103A, 103B, 104A, 104B** du boitier **100** formant un sous-ensemble tubulaire de section rectangulaire formant un corps du boitier **100** sont constituées par les parois latérales **203A, 203B, 204A, 204B** du godet **20.** Dans une telle configuration :
- l'une **101** des parois parmi la premièrse **101** et la deuxième **102** parois d'extrémité constitue un couvercle du boitier **100** fermant le godet **20** ; et
- l'autre **102** des parois parmi la première **101** et la deuxième **102** parois d'extrémité constitue un fond du godet **20** ou un deuxième couvercle du boitier **100** fermant le godet **20.**

Les premier et deuxième orifices principaux **111** et **112,** ainsi que les premier et deuxième orifices secondaires **121, 122** ne sont plus portés par les couvercles mais par les parois latérales **103A, 103B, 104A, 104B** du boitier **100** correspondant aux parois latérales **203A, 203B, 204A, 204B** du godet **20.**

De manière générale, le premier orifice principal **111** est disposé au voisinage de la première portion d'extrémité **201",** et le deuxième orifice principal **112** est disposé au voisinage de la deuxième portion d'extrémité **202"** du godet **20.**

Les parois parmi la première **101** et la deuxième **102** parois d'extrémité ferment longitudinalement le corps de boitier **100** de part et d'autre de celui-ci dans une position assemblée, et ce, notamment pour garantir une étanchéité aux gaz dans l'espace intérieur **30** du boitier **100.**

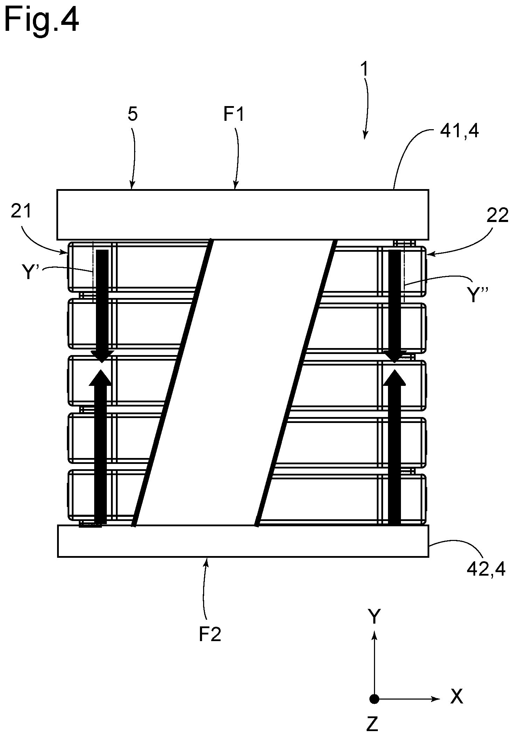

Sur la figure **4** est représenté un assemblage **1** d'une pluralité de cellules **10** obtenues suivant le premier ou le deuxième mode de réalisation de l'invention. Les cellules **10** sont alignées suivant un axe d'assemblage **A,** transversal aux cellules **10.** Cet axe d'assemblage **A** est orthogonal aux axes longitudinaux des cellules **10.**

Les cellules **10** sont accolées et en vis-à-vis deux à deux suivant l'axe d'assemblage **A,** de sorte que la première surface de contact électrique **51** du premier terminal **11** de la première des deux cellules **10** vient en contact avec la deuxième surface de contact électrique **S2** du deuxième terminal **12** de la deuxième des deux cellules adjacentes.

Les cellules **10** se trouvant aux deux extrémités axiales de l'assemblage **1** par rapport à l'axe d'assemblage **A,** sont connectées électriquement à deux portions de carter **41, 42** d'un module de batterie **5.** De préférence, les deux portions de carter **41, 42** de module **5** forment des moyens de compression **4** pour presser l'assemblage **1** de part et d'autre de l'axe d'assemblage **A** et maintenir le contact entre les surfaces de contacts électriques **S1, S2** des terminaux **11, 12.**

Chaque cellule **10** adjacente est compressé de sorte à maintenir les surfaces de contacts électriques **S1, S2** des terminaux **11, 12** en contact et en appui l'une contre l'autre. Cette connexion est localisée au niveau du seul terminal de sorte à créer un jeu au niveau de zones d'espacements entre deux cellules adjacentes à distance surfaces de contacts électriques **S1, S2** des terminaux **11, 12.** Un tel jeu peut laisser un degré de mobilité à une cellule dans l'assemblage **1.**

Pour pallier une telle contrainte, l'assemblage **1** de cellules **10** peut disposer de séparateurs ou tampons de compensation (non représentés) permettant de compenser la distance entre deux extrémités longitudinales de deux grandes parois latérales **104A, 104B** de deux cellules **10** adjacentes qui ne sont pas reliées par des terminaux de cellules **11, 12.** Plus précisément, lorsque deux terminaux **11, 12** de deux cellules adjacentes sont en contact suivant un axe transversal **Y',** un séparateur coplanaire à la surface de contact électrique des deux terminaux **11, 12** associés et centré sur l'axe transversal **Y"** peut être inséré pour compenser la distance entre les deux cellules **10.** Un tel séparateur peut ainsi être interposé entre chacune des cellules adjacentes ou entre les cellules **10** se trouvant aux deux extrémités axiales de l'assemblage **1** par rapport à l'axe d'assemblage **A** et le carter **41, 42** de module **5** correspondant.

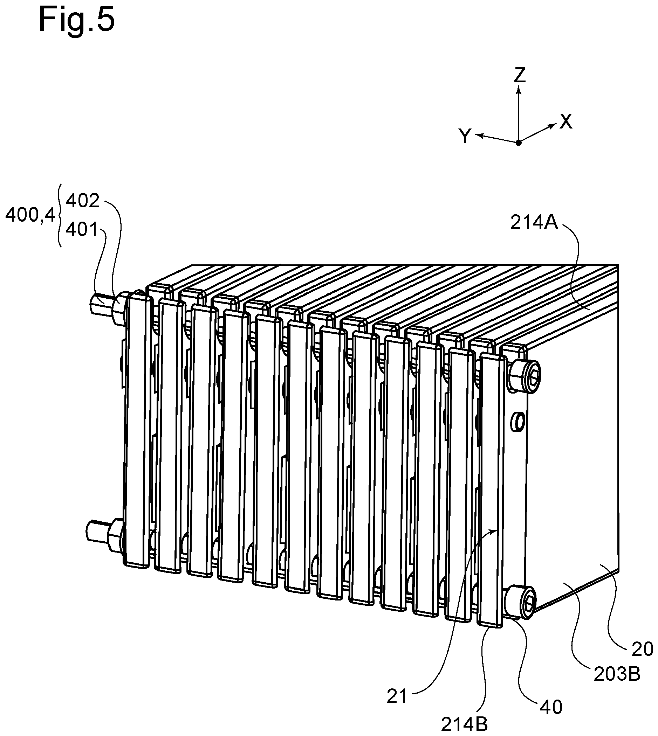

Sur la figure **5** est représenté l'assemblage **1** d'une pluralité de cellules **10** obtenues suivant le premier mode de réalisation de l'invention. Chaque couvercle **21, 22** de chaque cellule **10** de la pluralité de cellules **10** est muni, d'un premier et d'un deuxième trous traversants de montage **40** orientés transversalement par rapport à chaque cellule **10** et situés transversalement de part et d'autre des terminaux de cellule **11, 12,** de sorte que lorsque les cellules **10** sont alignées suivant l'axe d'assemblage **A,** les trous traversants **40** sont transversalement alignés.

Pour relier électriquement la pluralité de cellules **10** de l'assemblage **1,** un boulon **400** constitué d'une tige filetée telle qu'une vis **401** et d'un écrou **402** taraudé complémentaire de la vis **401** est inséré dans chaque rangée de trous traversants **40** des cellules **10** pour presser la pluralité de cellules **10** de part et d'autre de l'axe d'assemblage **A.** Les boulons **400** constituent les moyens de compression **4** de l'assemblage **1.**

Selon un mode de réalisation non représenté, l'assemblage **1** de la pluralité de cellules **10** peut être réalisé par d'autres moyens de compression **4** disposés de part et d'autre de l'axe d'assemblage **A** ou entre les terminaux **11, 12** des cellules, par exemple.

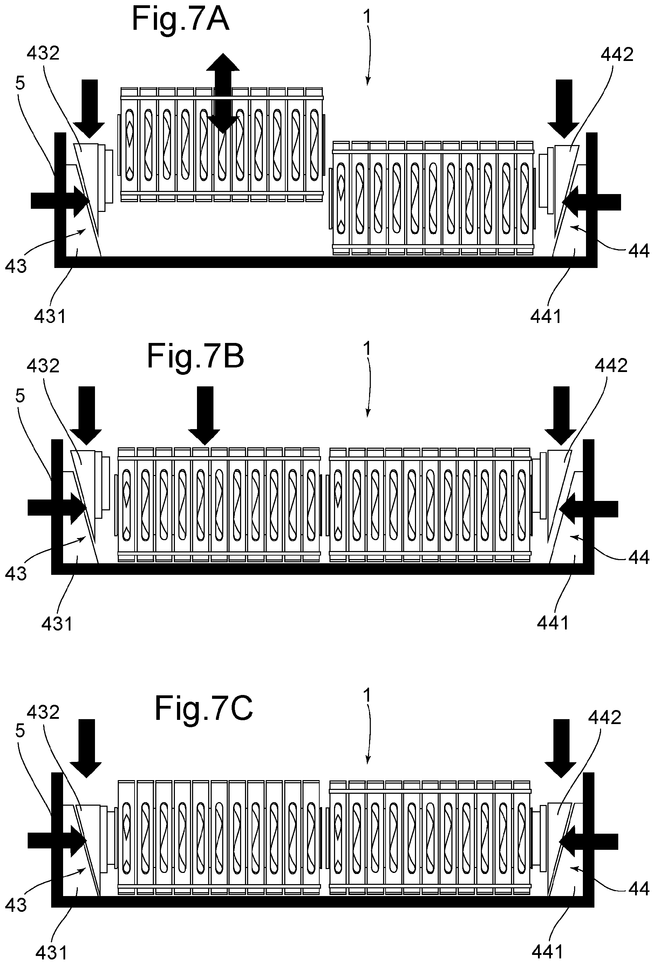

Par exemple, les figures 7A, 7B et 7C illustrent des schémas de principe d'un assemblage **1** d'une pluralité de cellules **10** dans un module de batterie **5,** et des moyens de compression **4** associés, selon un autre mode de réalisation de l'invention. Les moyens de compression **4** sont formés d'une première et d'une deuxième mâchoires **43, 44** disposées aux deux extrémités transversales de la pluralité de cellules **10** de batterie. Les mâchoires **43, 44** comprennent chacune un élément fixe **431, 441** fixé au module de batterie **5** et un élément mobile **432, 442** suivant un axe longitudinal de la pluralité de cellules **10.** Les éléments mobiles **432, 442** disposent chacun d'un terminal apte à effectuer une connexion électrique avec les terminaux **11, 12** des cellules **10** situées aux extrémités de la pluralité de cellules **10** et qui ne sont pas en contact avec des terminaux d'autres cellules **10** de la pluralité de cellules **10.** En particulier, les éléments mobiles **432, 442** permettent l'insertion de la pluralité de cellules **10** à l'intérieur du module de batterie **5,** comme représenté sur les figures 7A et 7B, et les éléments fixes **431, 441** permettent de compresser la pluralité de cellules **10** de part et d'autre de l'axe d'assemblage **A** de la pluralité de cellules **10.**

Selon un autre mode de réalisation de l'invention, l'assemblage **1** de la pluralité de cellules **10** peut être obtenu par la combinaison d'au moins deux moyens de compression **4** des cellules **10.**

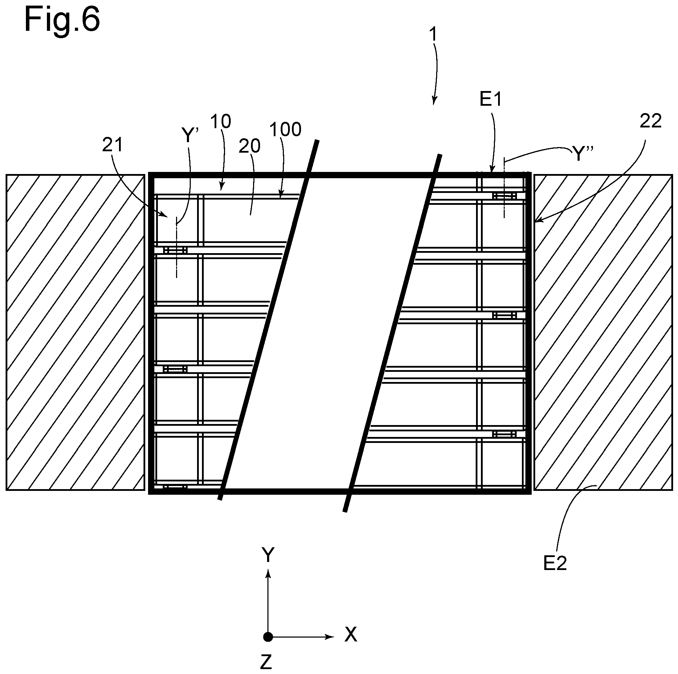

Sur la figure **6** est illustré l'encombrement **E1** de l'assemblage de cellules **10** de batterie obtenu selon le premier ou le deuxième mode de réalisation de l'invention. L'assemblage **1** de l'invention ne dispose pas d'éléments d'interconnexion disposés de part et d'autre des cellules assemblées par rapport à l'axe d'assemblage **A,** ce qui permet de réduire considérablement l'encombrement spatial longitudinal **E1** de l'assemblage **1** par rapport à un encombrement spatial **E2,** représenté par des hachures, d'un assemblage de cellules de batterie connu dans l'état de l'art, et ce, pour un volume utile égal voire supérieur au volume utile d'un assemblage de cellules connu dans l'état de l'art.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Boitier (100) de cellule (10) pour une cellule de batterie, le boitier (100) comprenant une première (101) et une deuxième (102) parois d'extrémité et quatre parois latérales (103A, 103B, 104A, 104B) s'étendant parallèlement entre elles deux à deux et parallèlement à un axe de référence (X) depuis la première paroi d'extrémité (101) jusqu'à la deuxième paroi d'extrémité (102), le boitier (100) étant **caractérisé en ce qu'**il comprend :
- un premier orifice principal (111) s'étendant dans un premier plan de référence (P1) coplanaire à une première paroi latérale (103A) du boitier (100) parmi la pluralité de parois latérales ; et
- un deuxième orifice principal (112) s'étendant dans un deuxième plan de référence (P2) coplanaire à une deuxième paroi latérale (103B) du boitier (100), la deuxième paroi latérale (103B) étant parallèle à la première paroi latérale (103A) du boitier (100) ;
chacun des premier et deuxième orifices principaux (111, 112) étant configuré pour accueillir respectivement un premier (11) et un deuxième (12) terminal de la cellule (10) de batterie.

2. Boitier (100) de cellule (10) selon la revendication 1, **caractérisé en ce que** le boitier (100) comprend un godet (20) et un ou deux couvercle(s) (21, 22) configuré(s) pour fermer, avec le terminal associé, un espace intérieur (30) du godet (20), et **en ce que** :
- le premier orifice principal (111) étant solidaire du godet (20) ou du couvercle (21) ou de l'un des deux couvercles (21, 22) ;
- le deuxième orifice principal (112) étant solidaire du godet (20) ou du couvercle (21) ou de l'autre des deux couvercles (22, 21).

3. Boitier (100) selon la revendication 1 ou 2, **caractérisé en ce que** les première et deuxième parois latérales (103A, 103B) du boitier (100) forment des grandes surfaces latérales du boitier (100) par rapport aux deux autres parois latérales (104A, 104B) formant des petites faces latérales du boitier (100).

4. Boitier (100) selon l'une des revendications 1 à 3, **caractérisé en ce qu'**il comprend :
- un premier orifice secondaire (121) complémentaire du premier orifice principal (111), s'étendant dans le deuxième plan de référence (P2), de préférence disposé en regard du premier orifice principal (111) par rapport à un axe (Y') parallèle à un axe transversal (Y) ; et/ou
- un deuxième orifice secondaire (122) complémentaire du deuxième orifice principal (112), s'étendant dans le premier plan de référence (P1), de préférence disposé en regard du deuxième orifice principal (112) par rapport à un axe (Y") parallèle à un axe transversal (Y).

5. Boitier (100) selon la revendication précédente, **caractérisé en ce que** au moins une paroi du boitier (100) est pourvue d'au moins un évent d'aération (104) fermé par une paroi amincie configurée pour former un point de faiblesse du boitier (100) en cas d'effet de gonflement contenu à l'intérieur de la cellule (10), de préférence une paroi du couvercle (21) ou d'un des deux couvercles (21, 22).

6. Boitier (100) selon l'une quelconque des revendications précédentes, **caractérisé en ce qu'**il possède une longueur supérieure à 250 mm, de préférence supérieure à 300 mm et/ou inférieure à 1500 mm, de préférence inférieure à 1200 mm.

7. Cellule de batterie (10) **caractérisée en ce qu'**elle comprend un boitier (100) de cellule (10) selon l'une des revendications 1 à 6.

8. Cellule de batterie (10) selon la revendication 7, **caractérisée en ce que** le boitier (100) délimite un espace intérieur (30) à l'intérieur duquel est logé au moins un empilement (301) d'électrodes positives et négatives, les électrodes positives étant reliées les unes aux autres à un premier terminal (11) de cellule (10) et les électrodes négatives étant reliées les unes aux autres à un deuxième terminal (12) de cellule (10), et **en ce que** :
- le premier terminal (11) de cellule (10) est maintenu fixement par une interface de fixation (110) dans le premier orifice principal (111) ; et
- le deuxième terminal (12) de cellule (10) est maintenu fixement par une interface de fixation (120) dans le deuxième orifice principal (112).

9. Cellule de batterie (10) selon la revendication 7 ou 8, **caractérisée en ce que** :
- le premier terminal (11) comprend une surface de contact électrique (S1) configurée pour venir au contact d'un autre terminal d'une cellule distincte adjacente, la surface de contact (S1) étant parallèle au premier plan de référence (P1) ; et/ou
- le deuxième terminal (12) comprend une surface de contact électrique (S2) configurée pour venir au contact d'un autre terminal d'une cellule distincte adjacente, la surface de contact (S2) étant parallèle au deuxième plan de référence (P1), et de préférence parallèle à la surface de contact électrique (S1) du premier terminal (11).

10. Cellule de batterie (10) selon l'une quelconque des revendications 7 à 9, **caractérisée en ce que** les premier (11) et deuxième (12) terminaux sont orientés suivant deux directions opposées.

11. Assemblage (1) d'une pluralité de cellules de batterie (10) selon l'une quelconque des revendications 7 à 10, **caractérisé en ce que** les cellules (10) sont accolées successivement deux à deux suivant un axe d'assemblage (A), de sorte que pour chaque paire de cellules adjacentes de la pluralité de cellules, un premier terminal (11) de l'une des cellules de la paire de cellules adjacentes est en contact avec un deuxième terminal (12) de l'autre des cellules de la paire de cellules adjacentes.

12. Assemblage (1) selon la revendication précédente, **caractérisé en ce qu'**il comprend des moyens de compression (4) pour presser l'assemblage de cellules (1) de part et d'autre dudit assemblage de cellules (1) suivant l'axe d'assemblage (A).
